# EUROPEAN PATENT APPLICATION

(11) **EP 1 482 398 A2**
(43) Date of publication of application: **01.12.2004**
(21) Application number: 04009115.9
(22) Date of filing: 16.04.2004
(51) Int. Cl.: G06F 3/023

(54) **Destination shortcut keys**

(30) Priority: 29.05.2003 US 446702
(71) Applicant: MICROSOFT CORPORATION, Redmond, WA 98052 (US)
(72) Inventor: Williams, Brian D ., Redmond, Washington 98052 (US); Saifee, Abid, Seattle, Washington 98102 (US); Hoffmann, Jeff, Hong Kong (CN); Lindhout, Daan, Seattle, Washington 98122 (US)
(74) Representative: Grünecker, Kinkeldey, Stockmair & Schwanhäusser Anwaltssozietät

(57) **Abstract**

User-programmable "destination keys" have two distinct modes of operation: program mode and operation mode. The mode may be chosen by the user by selecting the destination key for either a normal or a long period of time. Responsive to selecting the destination key for a longer than normal time, the destination key may be automatically programmed and/or a user interface may be presented. The destination key may further be programmed in accordance with an automatically determined current context. A legend key may also be provided that allows a user to easily and conveniently receive an indication of which destinations are assigned to which destination keys.

## Description

### FIELD OF THE INVENTION

Aspects of the present invention are directed generally to providing programmable shortcuts in a computer input device or other electronic device, and more specifically to providing an improved technique for defining and using such shortcuts.

### BACKGROUND

Conventional keyboards for personal computers have a set of function keys (eg., F1, F2, F3, etc.) and may also have a set of user-programmable hot keys. The user may set the function assigned to a hot key such that subsequent pressing of the hot key causes the desired function to be performed.

Unfortunately, many users do not take advantage of conventional hot keys because it is inconvenient to assign functions to them, and because they may not even realize such a capability exists. Hot keys are typically assigned a function by the user via a control panel applet. Thus, to assign a function to such a hot key, the user may have to open a control panel applet, and then navigate through a wizard or a series of user interfaces. Alternatively, the user could create their own desktop shortcut. In either case, not only is this way of programming hot keys time-consuming, but also the capability of programming hot keys becomes effectively hidden to the average user. In other words, where it is not immediately apparent how to program a hot key, many users would not even realize that the hot keys could be programmed at all, much less realize how to program them.

To make matters worse, once hot keys are programmed, it is often difficult to recall which function is assigned to each hot key. This is especially true where there are several hot keys on a keyboard. Typically, to determine a hot key's function, the user would have open a control panel applet, and then view the assigned function for the desired hot key. Alternatively, the user could press the hot key to cause the assigned function to be performed, thereby discovering what the assigned function is, and then undoing the function if it is not desired.

It is apparent that there is a need for user-programmable keys that are more user-friendly to both program and use. There is also a need for a convenient and quick way to determine which function a programmable key is assigned to.

### SUMMARY OF THE INVENTION

Aspects of the present invention are directed to a device, such as a keyboard, having one or more "destination keys" that are user-programmable in a convenient way. The destination keys have two distinct modes of operation: program and operation. The user may choose the mode by selecting the destination key for either a normal or a long period of time. For example, to program a destination key, the user needs to hold down, or otherwise select, the destination key for a longer than normal period (eg., one to three seconds or more). Responsive to selecting the destination key for such a lengthy period, the destination key may be automatically programmed and/or a user interface may be presented prompting the user to select a destination to be assigned to the destination key. The prompt may include as a default the current destination that the user need merely agree to such as by selecting an "OK" button on the screen. Thus, it is much easier to program a destination key than a conventional hot key. Indeed, programming of the destination keys is similar to programming preset buttons commonly found on car radios. It is also likely that a user might accidentally discover this feature when pressing a destination key for a lengthy period. In any event, once the destination key is programmed, subsequent selection of the destination key for a normal period of time (e.g., less than one second), results in the assigned destination being accessed. The destination may be anything such as, but not limited to, a file, a folder, an Internet address or other network location, an application, or a function. The term "key" as used herein to describe aspects of the present invention includes, e.g., both physical and virtual buttons, switches, dials, wheels, slides, and knobs. Each of a set of keys may be physically distinct from one another or may share the same physical structure. For example, keys may be conventional physical keys or buttons on a conventional physical keyboard, or defined areas on a touch-sensitive keypad.

Further aspects of the present invention are directed to programming a destination key according to a "current context." A current context as used herein refers to a state of the user interface of the device and/or computer at the time a destination key is selected (e.g., at the time the destination key is initially selected) for a longer than normal period. For example, the current context may be the application in focus, a web site that is being browsed in the background, or a current folder or file that is open. The destination key may be automatically programmed according to the current context, and/or the user may be prompted to program the destination key, where a suggested destination is provided to the user in accordance with the current context.

Still further aspects of the present invention are directed to a legend key that allows a user to easily and conveniently receive an indication of which destinations are assigned to which destination keys. For example, a user may press a key that causes some or all of the assignments of the destination keys to be viewed on a display screen. The assignments may be displayed one at a time, or a plurality of the assignments may be displayed simultaneously.

### BRIEF DESCRIPTION OF DRAWINGS

The foregoing summary of the invention, as well as the following detailed description of illustrative embodiments, is better understood when read in conjunction with the accompanying drawings, which are included by way of example, and not by way of limitation with regard to the claimed invention.

Figure 1 is a functional block diagram of an illustrative digital computing environment in accordance with aspects of the present invention.

Figure 2 is a partial plan view of an illustrative keyboard having destination keys and a legend key in accordance with aspects of the present invention.

Figure 3 is a plan view of an illustrative mouse having destination keys in accordance with aspects of the present invention.

Figure 4 shows an illustrative touch screen having destination keys in accordance with aspects of the present invention.

Figure 5 is a flowchart showing illustrative steps in a method for using and programming destination keys in accordance with aspects of the present invention.

Figure 6 is a screenshot of an illustrative graphical user interface associated with assigning a destination key in accordance with aspects of the present invention.

Figure 7 is a screenshot of an illustrative graphical user interface associated with viewing assignments of destination keys in accordance with aspects of the present invention.

### DETAILED DESCRIPTION OF ILLUSTRATIVE EMBODIMENTS

### Digital Computing Environment

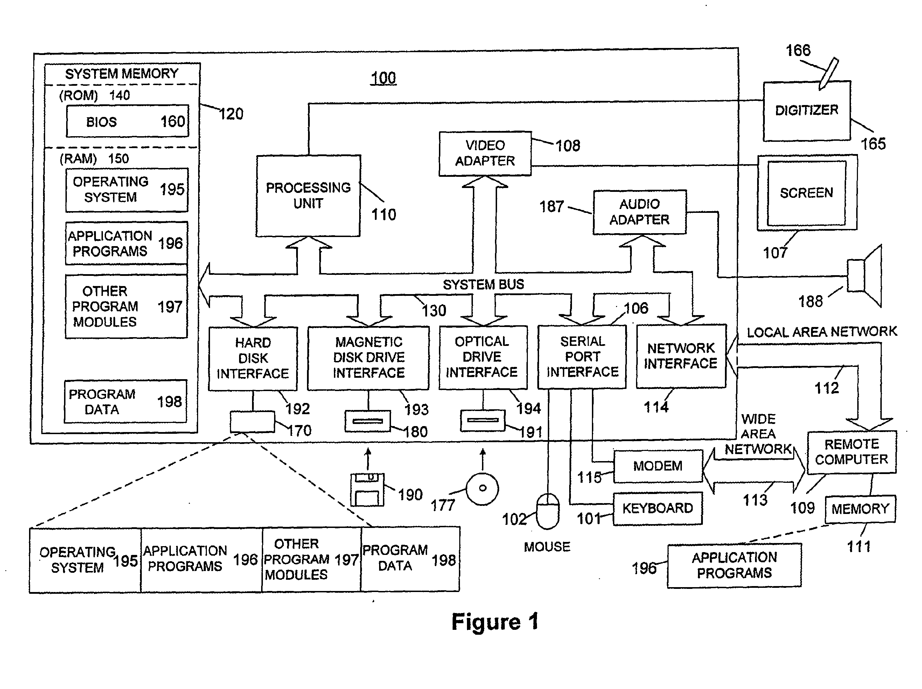

Figure 1 is a functional block diagram of an example of a conventional general-purpose digital computing environment that can be used to implement various aspects of the present invention. Although a computer is specifically described in this section, the following discussion applies to other types of electronic devices, especially those that utilize processors and connect to a network such as the Internet (although this discussion is not limited as such). Such other devices include, but are not limited to, cellular phones and personal digital assistants (PDA). In Figure 1, an illustrative computer 100, such as a personal computer, includes a processing unit 110, a system memory 120, and a system bus 130 that couples various system components including the system memory to the processing unit 110. The system bus 130 may be any of several types of bus structures including a memory bus or memory controller, a peripheral bus, and a local bus using any of a variety of bus architectures. The system memory 120 includes read only memory (ROM) 140 and random access memory (RAM) 150.

A basic input/output system 160 (BIOS), containing the basic routines that help to transfer information between elements within the computer 100, such as during start-up, is stored in the ROM 140. The computer 100 also includes a hard disk drive 170 for reading from and writing to a hard disk (not shown), a magnetic disk drive 180 for reading from or writing to a removable magnetic disk 190, and an optical disk drive 191 for reading from or writing to a removable optical disk 177 such as a CD ROM or other optical media. The hard disk drive 170, magnetic disk drive 180, and optical disk drive 191 are connected to the system bus 130 by a hard disk drive interface 192, a magnetic disk drive interface 193, and an optical disk drive interface 194, respectively. The drives and their associated computer-readable media provide nonvolatile storage of computer readable instructions, data structures, program modules and other data for the computer 100. It will be appreciated by those skilled in the art that other types of computer readable media that can store data that is accessible by a computer, such as magnetic cassettes, flash memory cards, digital video disks, Bernoulli cartridges, random access memories (RAMs), read only memories (ROMs), and the like, may also be used in the example operating environment

A number of program modules can be stored on the hard disk drive 170, magnetic disk 190, optical disk 177, ROM 140 or RAM 150, including an operating system 195, one or more application programs 196, other program modules 197, and program data 198. A user can enter commands and information into the computer 100 through input devices such as a keyboard 101 and pointing device 102. The operating system 195 may be any operating system such as, but not limited to, UNIX, LINUX, Microsoft WINDOWS brand operating system, or Apple MACINTOSH brand operating system. Other input devices (not shown) may include a microphone, joystick, game pad, satellite dish, scanner or the like. These and other input devices are often connected to the processing unit 110 through a serial port interface 106 that is coupled to the system bus 130, but may be connected by other interfaces, such as a parallel port, game port, universal serial bus (USB), PS/2 connection, or Bluetooth connection. Further still, these devices may be coupled directly to the system bus 130 via an appropriate interface (not shown). A screen 107 or other type of display device is also connected to the system bus 130 via an interface, such as a video adapter 108. In addition to the screen, computers typically include other peripheral output devices (not shown), such as speaker 188 (via audio adapter 187) and printers. In an illustrative embodiment, a digitizer 165 and accompanying pen or stylus 166 may be provided in order to digitally capture freehand input. The digitizer 165 may further operate as a touch-sensitive and/or proximity-sensitive device that may sense the position of the stylus 166 and/or a human finger or other pointing device. Although a direct connection between the pen digitizer 165 and the serial port is shown, in practice, the pen digitizer 165 may be coupled to the processing unit 110 directly, via a parallel port or other interface and the system bus 130 as known in the art. Furthermore, although the digitizer 165 is shown apart from the screen 107, it is preferred that the usable input area of the digitizer 165 be co-extensive with the display area of the screen 107. Further still, the digitizer 165 may be integrated in the screen 107, or may exist as a separate device overlaying or otherwise appended to the screen 107.

The computer 100 can operate in a networked environment using logical connections to one or more remote computers, such as a remote computer 109. The remote computer 109 can be a server, a router, a network PC, a peer device or other common network node, and typically includes many or all of the elements described above relative to the computer 100, although only a memory storage device 111 has been illustrated in Figure 1. The logical connections depicted in Figure 1 include a local area network (LAN) 112 and a wide area network (WAN) 113. Such networking environments are commonplace in offices, enterprise-wide computer networks, intranets and the Internet.

When used in a LAN networking environment, the computer 100 is connected to the local network 112 through a network interface or adapter 114. When used in a WAN networking environment, the computer 100 typically includes a modem 115 or other means for establishing a communications link over the wide area network 113, such as the Internet. The modem 115, which may be internal or external, is connected to the system bus 130 via the serial port interface 106. In a networked environment, program modules depicted relative to the computer 100, or portions thereof, may be stored in the remote memory storage device 111.

It will be appreciated that the network connections shown are illustrative and other techniques for establishing a communications link between the computers can be used. The existence of any of various well-known protocols such as TCP/IP, Ethernet, FTP, HTTP and the like is presumed, and the system can be operated in a client-server configuration to permit a user to retrieve web pages from a web-based server. Any of various conventional web browsers can be used to display and manipulate data on web pages.

### Destination Keys

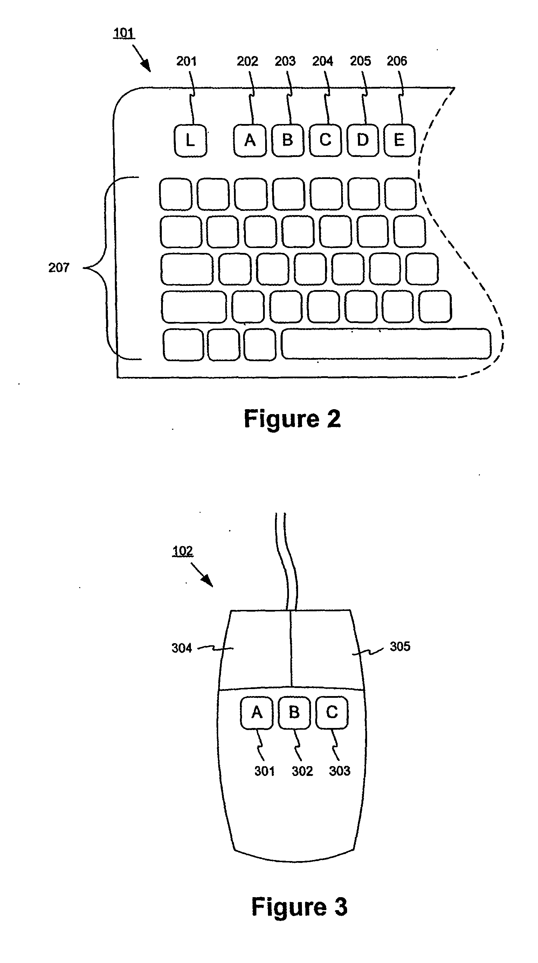

Referring to Figure 2, an electronic device, such as the keyboard 101, may include one or more keys 202, 203, 204, 205, 206 that will be referred to herein as "destination keys." The keyboard 101 may further include an alphanumeric section 207 including a plurality of alphanumeric keys. Although five destination keys 202-206 are shown on this particular device, any number may be included. For example, it may be desirable to include from three to five destination keys on a device. Each of the destination keys 202-206 may be individually labeled with indicia to help the user distinguish them. In the present example, the destination keys 202-206 are labeled with letters A through E, respectively. However, any indicia may be used such as alphanumeric characters, symbols, icons, colors, and/or any other indicia. Also, destination keys may be located anywhere on a device. In the illustrated embodiment, the destination keys 202-206 are shown in a particular location on the keyboard 101. However, the destination keys 202-206 may be located anywhere on the keyboard 101.

The destination keys 202-206 may be dedicated keys that function only as destination keys. Alternatively, the destination keys 202-206 may have additional functionality. For example, the destination keys 202-206 may also operate as standard function keys (e.g., F1, F2, F3, etc.) when one or more of the Shift, Alt, or Ctrl key is pressed at the same time as the respective destination key.

Each of the destination keys 202-206 may be assigned a particular destination. The assigned destination may be stored in memory and associated with the appropriate destination key, such as in a registry entry. When a user selects a particular destination key for a normal period of time, the user may be directed to the destination assigned to the selected shortcut key (i.e., the destination may be launched). A normal period of time is generally the amount of time that a user would be expected to select a key with the intention to select that key in a traditional way. For example, it may be expected that a user would normally select a key for less than, eg., one second. On the other hand, a user may typically not be expected to select a key for, e.g., three seconds, unless the user specifically intended to select the key for such a longer period of time. What is considered a normal period of time may depend upon the digital computing environment in which the destination key resides.

A destination may be, but is not limited to, a file, a folder, an Internet address or other network location, an application, or a function. For example, where the destination is a file, the file may be a word processing document, an image file, or any other type of file. For example, where a particular shortcut key is assigned a word processing document named abc.doc, pressing that shortcut key for a normal amount of time would cause the computer 100 to open the file abc.doc. The application for that type of file (e.g., a word processing applications) may also be launched, if not already running, so that the file abc.doc may be viewed and/or edited by the user.

Where the destination is a folder, the folder may be any folder or subfolder, such as a folder created by the operating system or by the user. Where the destination is an Internet address, the Internet address may be part of the world-wide web, such as www.cnn.com, or may be part of another portion of the Internet. Where the destination is an application, the application may be a particular word processor, Internet browser, or spreadsheet application. Where the destination is a function, the function may be any function defined by the operating system, an application, or a user.

The keyboard 101 may further include a legend key 201. When the user selects the legend key 201, the computer 100 may display the current assignments of some or all of the destination keys 202-206, either simultaneously or one at a time.

Although the keyboard 101 is used as an example, the destination keys and/or a legend key may be located on any of a variety of electronic devices. For instance, referring to Figure 3, the mouse 102 may include one or more dedicated destination keys 301, 302, 303. The destination keys 301-303 may be located anywhere on the mouse 102. In certain instances, one or more of the destination keys 301-303 may be dedicated destination keys or may also serve as a function key; for example, when a user selects a destination key together with the left and/or right mouse buttons 304, 305. Although not shown, the mouse 102 may also have a legend key such as the legend key 201 of Figure 2.

Examples of other devices that may have one or more destination keys and/or a legend key include, but are not limited to, desktop computers, laptop computers, personal digital assistants (PDAs), tablet-style personal computers, cellular phones, computer displays (e.g., CRTs, liquid crystal screens, etc.), remote controls, and computer user interface devices (e.g., a mouse, a joystick, etc.). Such devices may or may not be coupled to a computer environment such as the environment shown in Figure 1. Further, a computing environment such as in Figure 1 may be incorporated into the device. Devices that have access to the Internet or another network may be particularly useful devices to incorporate destination keys, especially where a desired destination is an Internet address or other network location.

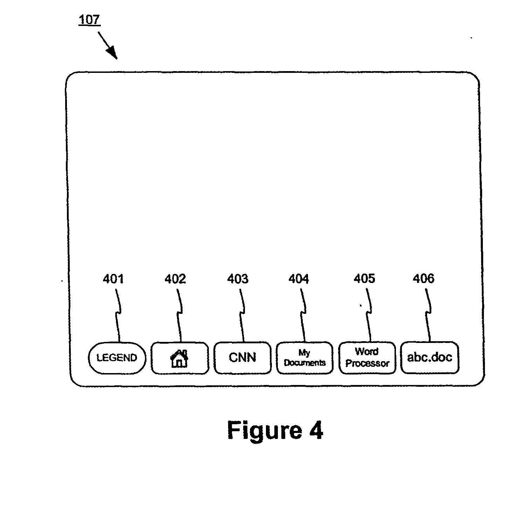

Destination keys and the legend key may be physical keys that are physically depressed and released. However, they need not be separate physical keys. In some embodiments, some or all of the destination keys and/or legend key may be virtual keys in that they are represented as particular locations on a touch-sensitive and/or proximity-sensitive device, and/or displayed on a screen such as in the form of icons or other graphical elements. For example, the screen 107 may be a touch-sensitive and/or proximity-sensitive screen. As shown in Figure 4, the screen 107 may display one or more virtual destination keys 402, 403, 404, 405, 406. The screen 107 may further display a virtual legend key 401. These displayed virtual keys may be selected by, e.g., touching them on a touch-sensitive screen or other touch-sensitive surface, and/or hovering near them on a hover-sensitive screen or other hover-sensitive surface. Hovering may also be detected as selection where the keys are physical keys and are configured to detect hovering. Displayed virtual keys may also be selected by using a mouse, joystick, or other similar cursor control device to click on them. Where virtual keys are displayed, they may be displayed showing their assigned destinations, as shown in Figure 4. In further embodiments, virtual destination keys and/or a legend key may be defined portions of a touch pad or touch strip, such as the digitizer 165, even though the touch pad or touch strip may not be incorporated into the screen 107.

### Assignment and Use of Destination keys

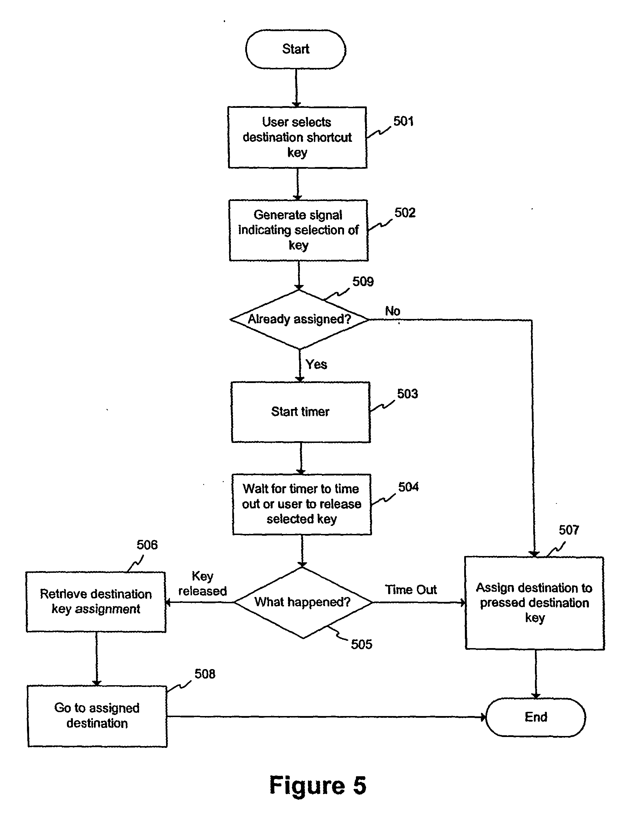

As previously discussed, destination keys are programmable in that they are assigned destinations. The destination may be assigned manually where the user particularly specifies the destination. The destination to which a destination key is assigned may further be assigned semi-automatically or automatically by the computer 100. Referring to Figure 5, the user may select a particular destination key (step 501). For example, where the destination key is a physical key, the user may depress and release the key. As will be discussed shortly, the amount of time the destination key is selected (e.g., depressed) may determine whether the selected destination key is to be assigned a destination or whether the user is to be taken to the pre-assigned destination. In response to the selection, the keyboard or other device may generate a signal indicating that the key has been selected (step 502). For example, the signal may indicate that a particular destination key has been depressed. Where the device is coupled to a computer, such as the keyboard 101 coupled to the computer 100, the signal may be forwarded to the computer.

It may optionally be determined whether the selected destination key has an assigned destination at the time the destination key is selected (step 509). If not, then a destination programming mode may be entered as discussed further below in connection with step 507. However, if it is determined that a destination key has been selected and that the destination key has already been assigned a destination, then a timer may be started (step 503). The timer may therefore start in response to the destination key initially being selected. The timer may be implemented by the coupled computer (e.g., the computer 100) and/or by the device incorporating the destination key (e.g., the keyboard 101). It may then be determined which happens first: the timer times out, or the user releasing the selected destination key prior to the timer timing out (steps 504 and 505). If the destination key is released before the timer times out, then the destination assigned to the selected destination key is retrieved from memory (e.g., from the system memory 120) or from the registry, and the user is directed to the destination (steps 506 and 508). On the other hand, if key continues to be selected after initial selection, and the timer times out prior to the key being released, then a destination may be assigned to the selected destination key (step 507), thereby programming the destination key. The destination key may be automatically programmed with the destination by the computer 100, or the computer 100 may present a user interface element prompting the user the provide or modify a destination to be assigned. Even where the destination is assigned automatically, the computer 100 may still present a user interface elements such as a visual and/or audio cue indicating to the user that the selected destination key has been assigned a destination.

Where the destination keys are part of the keyboard 101, the various signaling between the keyboard 101 and the computer 100 may vary depending upon the type of keyboard. For example, for a PS/2 keyboard, a ''make scan code" may be generated in response to a destination key being depressed, and a "break scan code" may be generated in response to the destination key being later released. Thus, the timer may be started in response to the make scan code. If the break scan code is received prior to the timer timing out, then the computer 100 knows that the destination key was released prior to that time. Otherwise, the destination key was held down for a longer than normal time. For a USB keyboard, a Human Interface Device (HID) report is generated in response to both a destination key being depressed and the destination key being later released. Thus, in this case, the timer may be started and stopped in response to the HID reports.

Thus, the user may either go to an assigned destination or program a destination key, depending upon how long the destination key is selected by the user. The period of the timeout that is used to distinguish between the two modes of operation may be any period of time. For example, the timeout may be a particular amount of time between one and 1.5 seconds, or between one and three seconds, or between one and five seconds. However, the timeout may be shorter than one second or longer than five seconds.

Thus, the destination keys have two distinct modes of operation. In the first mode, the destination keys may be programmed. This first mode may be invoked by selecting (e.g., depressing) one of the destination keys, and continuing to select the destination key for longer than a normal period of time, i.e., beyond when the timer times out. The first mode may be invoked as soon as the timer has timed out, or upon the destination key being eventually released beyond the timer timing out. However, where the destination key does not have an assigned destination at the time the destination key is selected, then the first mode may be invoked immediately upon selecting that destination key, regardless of how long the destination key is selected for. In the second mode, the destination keys may cause a destination to be accessed. The second mode may be invoked by pressing one of the destination keys for a normal range of time, i.e., prior to the timer timing out. In some embodiments, a destination key may be modified with the simultaneous selection of another key such as the Shift, Ctrl, Alt, Win, or App keys on a keyboard. The selection of one or more of these modifier keys in combination with a destination key may allow the destination key to be assigned more than one destination, depending upon which modifier key is selected. Likewise, the selection of a modifier key with a destination key may allow different destinations to be accessed by use of that destination key. For example, destination key A may launch www.microsoft.com, Shift plus destination key A may launch Microsoft WORD brand word processing software, and Ctrl plus destination key A may launch www.cnn.com.

In step 507, the selected destination key may be programmed in a variety of ways. For example, the selected destination key may be programmed according to a specified destination supplied by the user. Or, in response to selecting a destination key for programming, the computer 100 may suggest a destination. Or, the computer 100 may automatically program the selected destination key with a destination. For the latter two situations, the destination depends upon a current context. For example, where the destination keys are used in connection with the computer 100, the current context may include, but is not limited to, one or more of the following: which application is currently in running, which document or other file is currently open and being viewed, which Internet address is currently being viewed, which folder is currently open, which window (in a graphical window-based user interface) is currently open, or which icon or file is currently highlighted or otherwise selected (e.g., on the desktop or in a folder). For example, when a particular word processor application is running and a particular document is open in the word processor, the current context would be the word processor that is running and/or the document that is open. As another example, where a user is browsing the web and is viewing a web site, the current context would be the browser application that is running and/or the address of the web site being viewed. As a further example, a user may have a file folder open, in which case the current context would be the folder that is open. The current context can change from moment to moment as different applications, folders, files, Internet sites, etc. are opened, closed, and changed.

Determination of the current context becomes more complex where the operating system can run multiple applications simultaneously, open multiple files and folders simultaneously, and browse multiple Internet sites simultaneously. This is common in graphical user interface-based operating systems such as Apple MACINTOSH brand operating system and Microsoft WINDOWS brand operating system. In such operating systems, while many objects (such as folders, applications, windows, etc.) may be open and/or running simultaneously, it is also common to have only one of the objects in the foreground at any one time. This is often referred to as focus; the object in the foreground is in focus. Often, where the object incorporates a user-controlled cursor, the cursor is controllable by the user only when that object is in focus. Focus can change from moment to moment as the user, operating system, and/or an application selects various objects to be in focus.

In computing environments where multiple simultaneous objects are available to the user, the current context may depend upon which object is in focus. For instance, where both a word processing application running document abc.doc and an Internet browser application displaying the web site www.cnn.com are active, and the word processing application is in focus, then the current context may be 1) the word processing application itself, 2) the document abc.doc, or 3) both. But, where the Internet browser application is in focus, then the current context may be 1) the Internet browser application itself, 2) the web address www.cnn.com, or 3) both. Which one of these is the current context may depend upon the desire of the user and/or the settings of the operating system and/or any applications that are running. Thus, focus may be a determining factor in what the current context is.

Depending upon the particular destination, there are various techniques that the computer 100 may use to obtain information about the destination and automatically or semi-automatically assign that destination to a destination key. For instance, when a destination key is being programmed automatically by the computer 100 and an Internet Browser is active, the computer 100 may detect the Internet browser being used and obtain the universal resource locator (URL) address of the current web page and assign the web page address to the destination key. The computer 100 may then store this URL address (or a portion thereof) as being associated with the selected destination key, such as in the registry entry for the selected destination key. Where the destination is a folder, the computer may request the operating system for the foreground folder path. This may be performed via standard Win32 application program interface (API) calls. Once the path is found for the folder, the path may be stored in the registry entry for the selected destination key. Where the destination is an application, the computer 100 may obtain the foreground window's handle and convert the handle using, e.g., Win32 APIs into an executable name that may include the full path to the application. The path and executable may be stored in the registry entry for the selected destination key. Where the destination is a file, the computer 100 may obtain the foreground window, determine the associated handle for the window, and translate the handle into an executable name. The computer 100 may know enough about the application to be able to retrieve the current open file in the foreground window of the application. For example, it may be sufficient, with some applications, to obtain the title bar text For other applications, their object models may need to be walked in order to retrieve the current open file. In any event, once the path and name of the file are retrieved, this information may be stored in the registry entry for the selected destination key.

It should be noted that, although a certain order of the illustrative steps are shown in Figure 5, other orderings of the steps are envisioned. For example, step 509 may be performed prior to performing step 502. Also, not all of the steps are required. For example, steps 502 and/or 509 may be bypassed altogether.

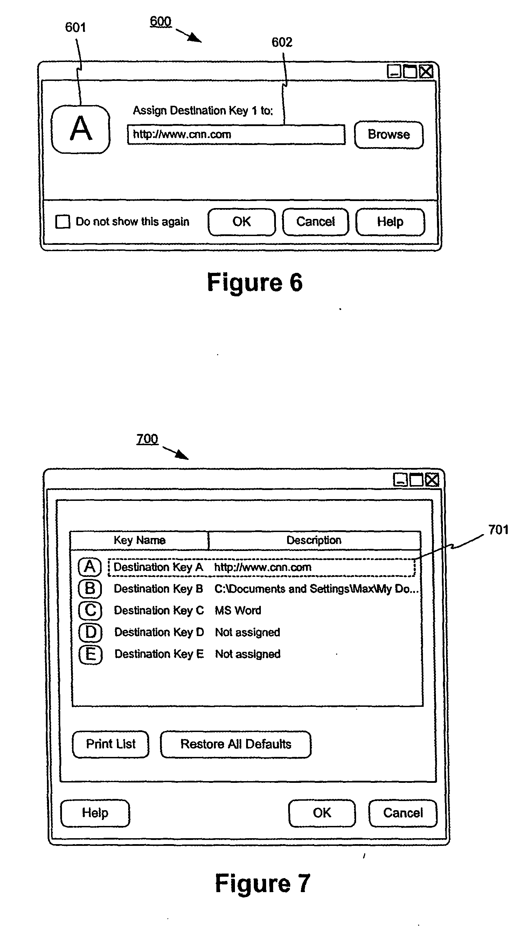

Referring to Figure 6, in response to the user selecting a destination key for programming, the computer 100 may display a user interface element such as illustrative dialogue window 600. Dialogue window 600 as shown includes an identification 601 of the selected destination key (in this example, destination key A 202). Dialogue window 600 also includes a text box 602 that allows the user to type in and/or browse for a destination. In the present example, the destination would be the web address www.cnn.com. In some embodiments, where the destination to be assigned to the selected destination key is automatically pre-selected by the computer 100 (such as based on the current context), the pre-selected destination may already be entered into the text box 602. The user may accept the pre-selected destination or modify it In further embodiments, where the current context may point to multiple possible destinations (such as where multiple applications or files are open), then the dialogue window 600 may include a listing of the possible suggested destinations from which the user may choose.

Also, in response to the user selecting a destination key for programming (e.g., remaining depressed beyond the timeout), the computer 100 may cause a sound to be generated, e.g., via the speaker 188. The sound may be a beep, music, a click, a tone, and/or any other sound or combination of sounds. A sound may also be generated when a destination key is selected for accessing the assigned destination rather than for programming the destination key. This latter sound may be different from the sound generated when the destination key is selected for programming. A further sound may be generated upon a destination key actually being assigned a destination. This may be particularly desirable when the computer 100 automatically assigns a destination in response to the user selecting the destination key beyond the timeout. This lets the user know that an assignment has just been made. The various sounds may be predefined and/or selected by the user. A dialogue or other information may also be displayed to the user upon a destination key being automatically assigned.

### The Legend Key

As discussed previously, a legend key (e.g., legend key 201) may be provided along with the destination keys. When the legend key is selected, the computer 100 may provide the user with information about the current assignments of the destination keys. Referring to Figure 7, an illustrative dialogue window 700 may be displayed in response to the legend key being selected. The dialogue window 700 as shown includes a list showing each of the destination keys and their corresponding respective assignments. For instance, the dialogue window 700 shows that destination key A (e.g., destination key 202) is assigned to destination web address www.cnn.com, destination key B (e.g., destination key 203) is assigned to destination folder C:\Documents and Settings\Max\My Documents, and destination key C (e.g., destination key 204) is assigned to the destination of Microsoft WORD brand word processing application. Such information may be useful to the user who forgets which destinations are assigned to the destination keys. The dialogue window 700 may show the destinations assigned to some or all of the destination keys simultaneously or one at a time. The dialogue window 700 also includes a highlight cursor 701 that the user may control to highlight and select one of the listed destination keys. When a particular destination key is highlighted and selected in the dialogue window 700, further information about that destination key may be provided, and/or the user may be presented with the opportunity to modify the destination for that destination key, such as by being presented with the dialogue window 600 for that destination key. In further embodiments, other types of feedback may be provided in response to a destination key being selected or programmed, such as audio and/or tactile feedback (eg., vibration of the keyboard 101 or mouse 102). The audio feedback may be different from audio feedback that may be provided when a destination key is pressed for longer than a normal period of time, and may be used to indicate that the assignments of the destination keys are being retrieved.

In further embodiments, the legend key may be used in conjunction with a particular destination key to display information about that particular destination key. For instance, the user may depress both the legend key and a destination key simultaneously. In response, the computer 100 may display information about that destination key only, and not the other destination keys.

### Destination Key System

In order to implement much of the previously-discussed features, the computer 100 and/or another device may be configured to provide destination key functionality. Such functionality may be provided by software, hardware, and/or firmware, herein referred to individually and collectively as the destination key system. The destination key system may provide the functionality of the destination keys and/or the legend key.

Where the destination key system includes software, the software may reside on the computer 100, when used, and/or on the device incorporating the destination keys and/or the legend key, such as the keyboard 101. The software may further configure a device driving a touch-sensitive screen to display virtual destination keys and/or a virtual legend key. The software may be part of an application, part of the operating system, an API, and/or may be a separate program. The software may reside as computer-executable instructions embodied on computer-readable media such as removable storage media (e.g., magnetic disk 190) and/or memory (e.g., system memory 120) in the computer 100.

Where the destination key system includes hardware and/or firmware, the hardware and/or firmware may reside in the computer 100, when used, and/or on the device incorporating the destination keys and/or the legend key (e.g., on the keyboard 101).

The destination key system may be part of the device incorporating the destination keys and/or legend key. Alternatively, the destination key system may be marketed in combination with the device as a kit. For example, a keyboard incorporating the destination keys may be sold along with a computer-readable medium containing software that may include a driver and that, when installed on a computer attached to the keyboard, configures the computer to utilize the destination keys as described herein. The kit as purchased may physically include both the device and the software, or the kit as purchased may physically include the device but include instructions for the purchaser to obtain the software separately, such as by downloading the software from the Internet. In such a case, the original computer-readable medium itself may be remote to the purchaser, such as on a server connected to the Internet.

While illustrative systems and methods as described herein embodying various aspects of the present invention are shown by way of example, it will be understood, of course, that the invention is not limited to these embodiments. Modifications may be made by those skilled in the art, particularly in light of the foregoing teachings. For example, each of the elements of the aforementioned embodiments may be utilized alone or in combination with elements of the other embodiments. Also, although much of the previous discussion has been with reference to a computing environment such as the computer 100, other computing environments such as PDA, cellular phones, and/or other similar devices may be used in accordance with the present invention. In addition, the invention has been defined using the appended claims, however these claims are illustrative in that the invention is intended to include the elements and steps described herein in any combination or sub combination. It will also be appreciated and understood that modifications may be made without departing from the true spirit and scope of the invention.

## Claims

1. In a personal computer, a method for programming a key on a keyboard, comprising steps of:
receiving from the keyboard an indication that the key is selected;
responsive to the signal, starting a timer;
detecting whether the key continues to be selected beyond the timer timing out; and
responsive to the key continuing to be selected beyond the timer timing out, programming the key.

2. The method of claim 1, wherein the step of programming the key includes programming the key in accordance with a current context.

3. The method of claim 2, wherein the current context is a file that is currently open or selected.

4. The method of claim 2, wherein the current context is an Internet web page address currently browsed to.

5. The method of claim 2, wherein the current context is an application that is currently running.

6. The method of claim 2, wherein the current context is a file folder that is currently open or selected.

7. The method of claim 2, wherein the current context is an element that is in focus.

8. The method of claim 2, further including a step of automatically determining the current context in response to the key continuing to be selected beyond the timer timing out.

9. The method of claim 1, further including a step of performing an action associated with the key responsive to the key being selected and released prior to the timer timing out.

10. The method of claim 1, further including a step of generating a sound responsive to the key continuing to be selected beyond the timer timing out.

11. The method of claim 1, wherein the programmable key is a physical key, and wherein selecting the programmable key includes physically depressing the programmable key.

12. The method of claim 1, further including a step of generating a user interface prompting a user to provide a first destination to be assigned to the key, in response to the key continuing to be selected beyond the timer timing out, wherein the step of programming the key includes programming the key either in accordance with the first destination or a second destination.

13. The method of claim 12, wherein the second destination is automatically determined in accordance with a current context.

14. The method of claim 1, wherein the timer times out between one and three seconds from when the key is initially selected.

15. The method of claim 1, wherein the step of programming the key is further responsive to the key being released beyond the timer timing out.

16. A computer-readable medium having computer-executable instructions for performing steps comprising:
starting a timer responsive to a key being selected;
detecting whether the key continues to be selected beyond the timer timing out;
responsive to the key continuing to be selected beyond the timer timing out, programming the key; and
further responsive to the key continuing to be selected beyond the timer timing out, generating a graphical user interface.

17. The computer-readable medium of claim 16, wherein the step of programming the key includes programming the key in accordance with a current context.

18. The computer-readable medium of claim 17, wherein the computer-executable instructions are further for performing a step of automatically determining the current context in response to the key continuing to be selected beyond the timer timing out.

19. The computer-readable medium of claim 16, wherein the computer-executable instructions are further for performing a step of performing an action associated with the key responsive to the key being released prior to the timer timing out.

20. The computer-readable medium of claim 16, wherein the graphical user interface prompts a user to provide a first destination to be assigned to the key, wherein the step of programming the key includes programming the key either in accordance with the first destination or with a second destination.

21. The computer-readable medium of claim 16, wherein the second destination is automatically determined in accordance with a current context.

22. The computer-readable medium of claim 16, wherein the timer times out between one and three seconds from when the key is initially selected.

23. A method for determining destinations of a plurality of destination keys in a computing environment, the method comprising steps of:
detecting that a legend key has been selected; and
responsive to the legend key being selected, indicating an assigned destination of each of the destination keys.

24. The method of claim 23, wherein the step of indicating includes simultaneously indicating the assigned destination of each of the plurality of destination keys.

25. The method of claim 23, wherein the step of indicating includes generating a graphical user interface that indicates the assigned destination of each of the destination keys.

26. The method of claim 23, further including a step of providing a user interface for allowing a user to change the indicated assigned destination of at least one of the destination keys.

27. A kit, comprising:
a device including a plurality of user-programmable destination keys; and
a computer-readable medium having computer-executable instructions for performing steps comprising:
detecting whether one of the destination keys continues to be selected beyond a timer timing out; and
responsive to the destination key continuing to be selected beyond the timer timing out, programming the destination key.

28. The kit of claim 27, wherein the device further includes a legend key, and wherein the computer-executable instructions are further for performing a step of indicating to a user an assigned destination of each of the destination keys responsive to the legend key being selected.

29. The kit of claim 27, wherein the device is a keyboard, the keyboard further including an alphanumeric section.

30. The kit of claim 27, wherein the computer-readable medium is a remote medium, data representing the computer-executable instructions being accessible to a purchaser of the kit via the Internet.

31. The kit of claim 27, wherein the timer times out between one and three seconds after the destination key is initially selected.

32. A computer-readable medium having computer-executable instructions for performing steps comprising:
detecting whether a programmable key continues to be selected beyond a timer timing out; and
responsive to the programmable key being selected beyond the timer timing out, generating a graphical user interface prompting a user to provide a destination to be assigned to the programmable key.

33. The computer-readable medium of claim 32, wherein the step of generating includes generating the graphical user interface to include a suggested destination based on a current context.

34. The computer-readable ,medium of claim 32, wherein the computer-executable instructions are further for performing a step of assigning either the suggested destination or the destination provided by the user to the programmable key.

35. In a personal computer, a method comprising steps of:
detecting that one of a plurality of destination keys has been initially depressed;
responsive to the destination key being initially depressed, starting a timer;
determining a destination that is one of a file, folder, Internet web page address, or application that is running or open; and
determining whether the destination key continues to be depressed beyond the timer timing out, and if so, assigning the destination to the destination key.

36. The method of claim 35, wherein the destination is one of a file, folder, Internet web page address, or application that is in focus at a time that the destination key is initially depressed.

37. The method of claim 35, further including a step of launching a destination already assigned to the destination key if the destination key is not depressed beyond the timer timing out.
